# EUROPEAN PATENT APPLICATION

(11) **EP 2 151 826 A1**
(43) Date of publication of application: **10.02.2010**
(21) Application number: 08764680.8
(22) Date of filing: 26.05.2008
(51) Int. Cl.: G11B 31/00, G01C 21/00, G08G 1/0969, G11B 33/02

(54) **ON-VEHICLE SYSTEM, NAVIGATION DEVICE, AND REPRODUCTION DEVICE**

(30) Priority: 29.05.2007 JP 2007141243
(71) Applicant: SANYO Electric Co., Ltd., Moriguchi-shi Osaka 570-8677 (JP)
(72) Inventor: IEDA, Kazuhiro, Hirakata City Osaka 573-1113 (JP)
(74) Representative: Cross, Rupert Edward Blount
(86) International application number: PCT/JP2008/059647
(87) International publication number: WO 2008/146783

(57) **Abstract**

In order to improve operability of two devices which function in an integrated manner and also function separately in a standalone mode, a navigation device includes a first connection status detecting portion (S64A) which detects an electrical connection with an audio device, and an operation accepting portion (S65, S66) which is capable of accepting an operation directed to the own device and an operation directed to the audio device irrespective of whether or not the electrical connection with the audio device is being detected, and the audio device includes a second connection status detecting portion which detects the electrical connection with the navigation device, and an AV control portion which controls an action in accordance with the operation accepted by the operation accepting portion in the navigation device during a time when the electrical connection with the navigation device is being detected.

## Description

### Technical Field

The present invention relates to a vehicle-mounted system, and a navigation device and a reproducing device constituting the same. More particularly, the present invention relates to a vehicle-mounted system in which a navigation device is detachable from, and attachable to, a reproducing device.

### Background Art

An audio device and/or a navigation device which reproduces music and/or video is often mounted in a vehicle. Japanese Utility Model Application Laid-Open No. 4-124486 discloses a mobile navigation system having an audio device and a navigation device arranged in a housing, wherein the navigation device is configured to be detachable from and attachable into the housing and function in a standalone mode when detached from the housing.

The conventional mobile navigation system, however, requires a space for disposing the housing into which the audio device and the navigation device are mounted, causing a limited room within a vehicle to be narrowed. Furthermore, although the navigation device can function in a standalone mode when detached from the housing, in the case where the navigation device is mounted in the housing and if the navigation device and the audio device are each functioning in a standalone mode, then the user has to stop at least one of the devices for safety reasons. This makes the system user-unfriendly.
[Patent Document 1] Japanese Utility Model Application Laid-Open No. 4-124486

### Disclosure of the Invention

### Problems to be Solved by the Invention

The present invention has been accomplished to solve the above-described problems, and an object of the present invention is to provide a vehicle-mounted system which ensures improved operability of two devices that function not only in an integrated manner but also in a standalone mode.

Another object of the present invention is to provide a navigation device having improved operability implemented when the navigation device is attached to a reproducing device.

Yet another object of the present invention is to provide a reproducing device having improved operability implemented when a navigation device is attached to the reproducing device.

### Means for Solving the Problems

To achieve the above-described objects, according to an aspect of the present invention, a vehicle-mounted system is constituted by a reproducing device capable of reproducing sound or video and a navigation device detachable from and attachable to a front face of the reproducing device, wherein the system includes connection detecting means for detecting an electrical connection between the navigation device and the reproducing device, the navigation device includes operation accepting means capable of accepting an operation directed to the own device and an operation directed to the reproducing device irrespective of whether or not the electrical connection with the reproducing device is being detected, and the reproducing device includes control means for controlling an action in accordance with the operation accepted by the operation means during a time when the electrical connection with the navigation device is being detected.

According to this aspect, in the navigation device, an operation directed to the reproducing device may be accepted while an electrical connection with the reproducing device is not being detected, and in the reproducing device, when the electrical connection with the navigation device is detected, the action is controlled in accordance with the operation accepted in the navigation device. This enables an operation directed to the reproducing device to be input into the navigation device before the navigation device is connected to the reproducing device. As a result, it is possible to provide a vehicle-mounted system which ensures improved operability of two devices which function in an integrated manner and also function separately in a standalone mode.

Preferably, the navigation device further includes operation storing means for storing the operation directed to the reproducing device when the operation directed to the reproducing device is accepted by the operation accepting means during a time when the electrical connection with the reproducing device is not being detected, and operation transmitting means for transmitting the operation stored in the operation storing means to the reproducing device in response to an event that the electrical connection with the reproducing device is detected.

According to this aspect, when an operation directed to the reproducing device is accepted in the navigation device in the state where the electrical connection with the reproducing device is not being detected, the operation is stored in the navigation device, and the operation stored is transmitted to the reproducing device in response to the event that the electrical connection with the reproducing device is detected. This enables the reproducing device to operate immediately after establishment of connection between the navigation device and the reproducing device, in accordance with the operation input into the navigation device before establishment of the connection.

Preferably, the control means receives the operation from the navigation device when the electrical connection with the navigation device is detected, and controls the action in accordance with the received operation.

According to this aspect, in the reproducing device, the operation is received from the navigation device when the electrical connection with the navigation device is detected, and the action is controlled in accordance with the received operation. This enables the reproducing device to operate immediately after establishment of connection between the navigation device and the reproducing device, in accordance with the operation input into the navigation device before establishment of the connection.

Preferably, the reproducing device further includes power supply switching means for turning on/off a sub-power supply, and the control means causes the power supply switching means to turn on the sub-power supply in the case where the electrical connection with the navigation device is detected in the state where the power supply switching means keeps the sub-power supply off.

According to this aspect, in the reproducing device, the sub-power supply is turned on when the electrical connection with the navigation device is detected in the state where the sub-power supply is off. This eliminates the need for a user to perform an operation to turn on the sub-power supply of the reproducing device after attaching the navigation device to the reproducing device, whereby the operations can be simplified.

According to another aspect of the present invention, a navigation device is detachable from and attachable to a front face of a reproducing device, the reproducing device being capable of reproducing sound or video, wherein the navigation device includes: reproducing device detecting means for detecting an electrical connection with the reproducing device; operation accepting means capable of accepting an operation directed to the own device and an operation directed to the reproducing device irrespective of whether or not the electrical connection with the reproducing device is being detected; operation storing means for storing the operation directed to the reproducing device when the operation directed to the reproducing device is accepted by the operation accepting means during a time when the electrical connection with the reproducing device is not being detected; and operation transmitting means for transmitting the operation stored in the operation storing means to the reproducing device in response to an event that the electrical connection with the reproducing device is detected.

According to this aspect, in the case where an operation directed to the reproducing device is accepted in the state where an electrical connection with the reproducing device is not being detected, the operation is stored. The stored operation is transmitted to the reproducing device in response to the event that the electrical connection with the reproducing device is detected. This enables the reproducing device to operate immediately after establishment of connection between the navigation device and the reproducing device, in accordance with the operation input into the navigation device before establishment of the connection. As a result, it is possible to provide a navigation device in which improved operability is implemented when the navigation device is attached to a reproducing device.

According to a further aspect of the present invention, a reproducing device is capable of reproducing sound or video, having a front face to and from which a navigation device is attachable and detachable, wherein the reproducing device includes: navigation device detecting means for detecting an electrical connection with the navigation device; receiving means for receiving an operation from the navigation device when the electrical connection with the navigation device is detected; and action control means for controlling an action in accordance with the operation received by the receiving means.

According to this aspect, when an electrical connection with the navigation device is detected, an operation is received from the navigation device, and the action is controlled in accordance with the received operation. This enables the reproducing device to operate immediately after establishment of connection between the navigation device and the reproducing device, in accordance with the operation input into the navigation device before establishment of the connection. As a result, it is possible to provide a reproducing device in which improved operability is implemented when a navigation device is attached to the reproducing device.

Preferably, the reproducing device further includes power supply switching means for turning on/off a sub-power supply, and the power supply switching means turns on the sub-power supply when the electrical connection with the navigation device is detected in the state where the power supply switching means keeps the sub-power supply off.

According to this aspect, when an electrical connection with the navigation device is detected in the state where the sub-power supply is off, the sub-power supply is turned on. This eliminates the need for a user to perform an operation to turn on the sub-power supply of the reproducing device after attaching the navigation device to the reproducing device, whereby the operations can be simplified.

### Brief Description of the Drawings

Fig. 1 is a perspective view showing an example of the external appearance of a vehicle-mounted system according to an embodiment of the present invention.
Fig. 2 is a side view of the vehicle-mounted system according to the embodiment.
Fig. 3 is a functional block diagram schematically illustrating the hardware configuration of the vehicle-mounted system according to the embodiment.
Fig. 4 is a functional block diagram schematically illustrating the functions of a CPU included in a navigation device.
Fig. 5 is a functional block diagram schematically illustrating the functions of a CPU included in an audio device.
Fig. 6 is a flowchart illustrating an example of the flow of an operation accepting process.
Fig. 7 shows an example of a screen which displays a main menu.
Fig. 8 shows an example of an audio menu.
Fig. 9 shows an example of a screen for setting an operation directed to a disc reproducing device.
Fig. 10 is a flowchart illustrating a flow of a process performed by the navigation device.
Fig. 11 is a first flowchart illustrating an example of the flow of a process performed by the audio device.
Fig. 12 is a second flowchart illustrating the example of the flow of the process performed by the audio device.

### Description of Reference Characters

1: vehicle-mounted system; 10: navigation device; 12: supported portion; 13: GPS receiver; 15: memory I/F; 15A: memory card; 23: liquid crystal display; 25: touch screen; 27: operation key; 29: audio codec; 31: switch; 33: amplifier; 35: speaker; 37: video decoder; 39: secondary battery; 41: power supply circuit; 43: first power supply switching portion; 50: audio device; 50A: supporting member; 50B: connector; 53: power supply key; 55: receiving portion; 57: radio receiving portion; 59: audio signal processing portion; 61: amplifier; 63: disc reproducing device; 67: power supply circuit; 69: second power supply switching portion; 70: remote controller; 71: antenna; 101: navigation control portion; 102: operation information storage portion; 103: display control portion; 105: switching control portion; 107: connection status detecting portion; 109: audio data control portion; 111: audio control portion; 113: first communicating portion; 115: operation accepting portion; 117: first operating condition detecting portion; 119: first power supply control portion; 121: second power supply control portion; 123: connection status detecting portion; 125: second communicating portion; 127: second operating condition detecting portion; 129: instruction accepting portion; and 131: AV control portion.

### Best Modes for Carrying Out the Invention

Embodiments of the present invention will now be described with reference to the drawings. In the following description, like reference characters denote like parts, which have like names and functions, and therefore, detailed description thereof will not be repeated.

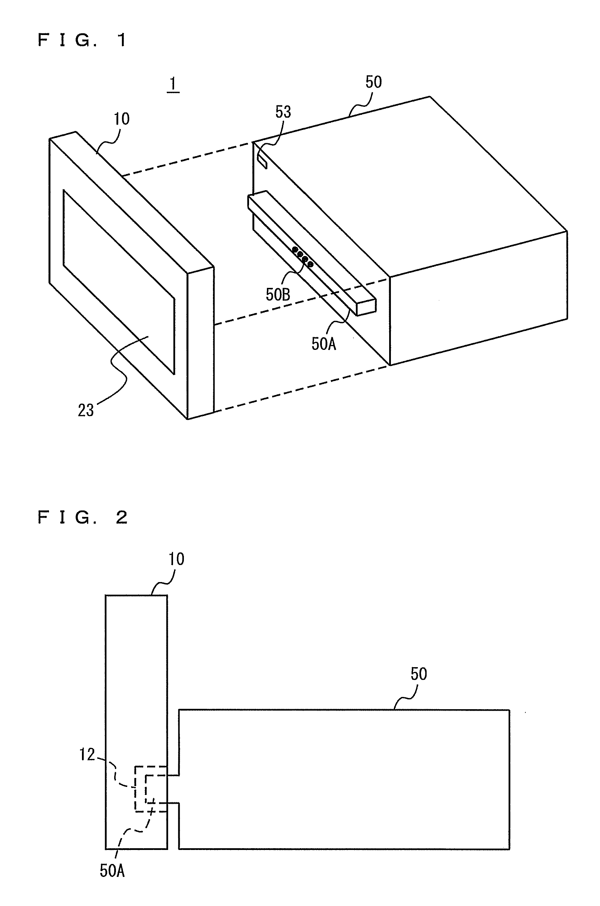

Fig. 1 is a perspective view showing an example of the external appearance of a vehicle-mounted system according to an embodiment of the present invention. Referring to Fig. 1, a vehicle-mounted system 1 includes a navigation device 10 and an audio device 50 as a reproducing device. Fig. 1 shows the state where navigation device 10 is detached from audio device 50. Navigation device 10 has a liquid crystal display 23 on its surface. Audio device 50 has a power supply key 53, a supporting member 50A, and a connector 50B on its front face. Audio device 50 is generally housed in a console box in a vehicle. When audio device 50 is housed into the console box of the vehicle, the front face thereof is exposed outside of the console box.

Fig. 2 is a side view of the vehicle-mounted system according to the present embodiment. Fig. 2 shows the state where navigation device 10 is attached to audio device 50. Referring to Fig. 2, navigation device 10 has its rear face provided with a supported portion 10A into which supporting member 50A is inserted. In the state where navigation device 10 is attached to audio device 50, supported portion 10A is connected with supporting member 50A. With this connection, navigation device 10 is supported by audio device 50 so as not to fall off therefrom. Navigation device 10 also has a connector on its rear face, to be connected with connector 50B included in audio device 50. It is configured such that the two connectors are connected with each other in the state where supporting member 50A and supported portion 10A are coupled with each other. When connector 50B included in audio device 50 is connected to the connector included in navigation device 10, audio device 50 and the navigation device are electrically connected to each other.

When navigation device 10 is mounted on audio device 50, the front face of audio device 50 is covered with navigation device 10, causing power supply key 53 to be covered with navigation device 10 and, hence, not to be operable from the outside. When audio device 50 is electrically connected to navigation device 10, however, audio device 50 is controlled by navigation device 10, as will be described later, allowing audio device 50 to be turned on/off with an operation key included in navigation device 10.

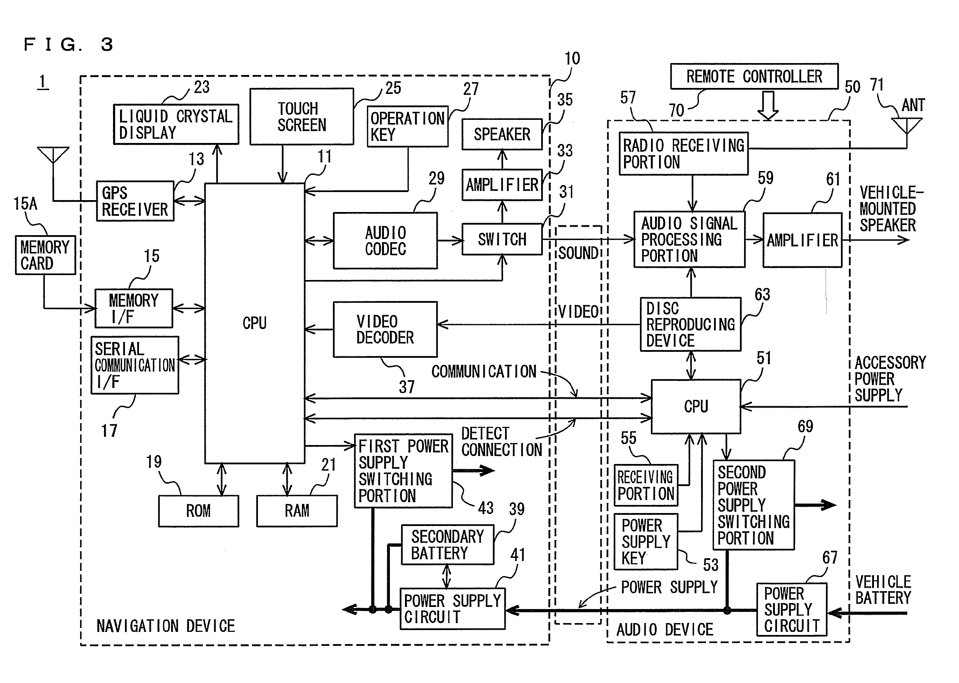

Fig. 3 is a functional block diagram schematically illustrating the hardware configuration of the vehicle-mounted system according to the present embodiment. Fig. 3 shows the functions of vehicle-mounted system 1 in the state where navigation device 10 and audio device 50 are electrically connected with each other. Navigation device 10 includes: a central processing unit (CPU) 11 which is responsible for overall control of navigation device 10; a read only memory (ROM) 19 which stores, among others, programs performed by CPU 11; a random access memory (RAM) 21 which is used as a work area of CPU 11; a GPS receiver 13; liquid crystal display 23; a touch screen 25; an operation key 27; an audio codec 29; a switch 31 which is connected with audio codec 29; an amplifier 33; a speaker 35 which is connected with amplifier 33; a video decoder 37; a secondary battery 39; a power supply circuit 41; a first power supply switching portion 43; a memory interface (I/F)15; and a serial communication I/F 17.

GPS receiver 13 receives radio waves from a GPS satellite in the global positioning system (GPS), and determines a current position on a map. It then outputs the measured position to CPU 11. An attachable/detachable memory card 15A is attached to memory I/F 15. CPU 11 reads map data stored in memory card 15A, and displays on liquid crystal display 23 an image in which the current position received from GPS receiver 13 is shown on a map. Hereinafter, the process performed by CPU 11 to output information using the map data stored in memory card 15A will be referred to as the navigation process. The navigation process includes processes performed by a general navigation device, such as a process of displaying a current position input from GPS receiver 13 on a map, a process of retrieving or displaying a map or information about facilities or the like residing on the map, and a process of searching for a route from the current position received from GPS receiver 13 to a destination. CPU 11, when executing the navigation process, outputs an audio signal resulting from speech synthesis to audio codec 29. The display is not limited to liquid crystal display 23, and may be a display such as an organic electro-luminescence display (ELD).

The touch screen, made of a transparent member, is provided on a display surface of liquid crystal display 23. The touch screen detects a position on the display surface of liquid crystal display 23 which has been designated by a user with his or her finger, and outputs the detected position to CPU 11. CPU 11 displays various buttons on liquid crystal display 23, and in combination with the designated positions detected by the touch screen, accepts various operating instructions. Operation screens displayed on liquid crystal display 23 by CPU 11 include an operation screen for operating navigation device 10 and an operation screen for operating audio device 50. Operation key 27 is a button switch, which includes a power supply key for turning on/off a main power supply.

Audio codec 29 includes a circuit for converting an analog audio signal into digital data and a circuit for converting digital data into an analog audio signal, and processes audio data. When audio codec 29 receives compression-coded audio data, it converts the data into an analog audio signal, and outputs it to switch 31.

Switch 31 has an input terminal connected to an output terminal included in audio codec 29. Switch 31 has two output terminals, one being connected with amplifier 33, the other being connected with a connector which is connected to audio device 50. Switch 31 is controlled by CPU 11 to output an audio signal received from audio codec 29 to one of the two output terminals. Amplifier 33 amplifies an audio signal received from switch 31, and outputs it to speaker 35.

In the case where memory card 15A stores audio data compression-coded in accordance with a standard such as MPEG audio layer-3 (MP3), CPU 11 can read the audio data to output it to audio codec 29. Accordingly, in the case where switch 31 has switched the output of the audio signal to the output terminal connected to amplifier 33, sound such as music stored in memory card 15A is output from speaker 35, whereas in the case where switch 31 has switched the output of the audio signal to the output terminal connected to the connector that is connected to audio device 50, the music stored in memory card 15A is output from audio device 50.

The video decoder includes a decoding circuit for converting the received digital data into an analog video signal. Video decoder 37 is controlled by CPU 11. When video decoder 37 receives compression-coded video data, it converts the data into an analog video signal for output to liquid crystal display 23. The video decoder has an input terminal connected with a connector which is connected to audio device 50. Therefore, when digital data is received from audio device 50 in the state where navigation device 10 is connected with audio device 50, an image of the video signal decoded from the digital data is displayed on liquid crystal display 23.

Power supply circuit 41 has an input terminal which is connected to an output terminal of a power supply circuit 67 included in audio device 50 when navigation device 10 and audio device 50 are connected to each other, so as to be supplied with power. Power supply circuit 41 supplies power to first power supply switching portion 43 during the time when navigation device 10 and audio device 50 are connected to each other. Secondary battery 39 is connected in parallel with power supply circuit 41. When secondary battery 39 becomes weak, it is charged with power supplied from power supply circuit 41 during the time when power supply circuit 41 is being supplied with power from power supply circuit 67 included in audio device 50. When navigation device 10 is disconnected from audio device 50, power supply circuit 41 supplies no power, and thus, in place of power supply circuit 41, secondary battery 39 discharges power so as to supply power to first power supply switching portion 43. This allows navigation device 10 to be driven by power supplied from secondary battery 39, even in the state where navigation device 10 is not connected with audio device 50.

First power supply switching portion 43 includes an input terminal for receiving power supplied from power supply circuit 41 and an output terminal for supplying the whole of navigation device 10 with power received by the input terminal. First power supply switching portion 43 is controlled by CPU 11 to turn on/off a sub-power supply. When first power supply switching portion 43 receives an instruction to turn on the sub-power supply from CPU 11, it supplies the whole of navigation device 10 with power. On the other hand, when first power supply switching portion 43 receives an instruction to turn off the sub-power supply, it supplies only CPU 11 with power.

CPU 11 is driven using power supply circuit 41 or secondary battery 39 as a power source. CPU 11 is driven while a main power supply is on, and is able to control first power supply switching portion 43 to turn on/off the sub-power supply. CPU 11 is driven while the main power supply is on, even when the sub-power supply is off. Circuits other than CPU 11 are not supplied with power when the main power supply is on and the sub-power supply is off. When CPU 11 turns on the sub-power supply, the whole of navigation device 10 is supplied with power from power supply circuit 41 or secondary battery 39. CPU 11 is supplied with power from power supply circuit 41 or secondary battery 39 while the main power supply is on, so that it can communicate with audio device 50.

Audio device 50 includes: a CPU 51 which is responsible for overall control of audio device 50; a disc reproducing device 63; a radio receiving portion 57; an audio signal processing portion 59; an amplifier 61; power supply key 53; a receiving portion 55 which receives infrared signals; power supply circuit 67; and a second power supply switching portion 69.

CPU 51 is supplied with power from an accessory power supply (ACC power supply) for a vehicle. Therefore, CPU 51 is driven while it is being supplied with the ACC power. The accessory power supply which supplies CPU 51 with power is here referred to as the main power supply for audio device 50.

Radio receiving portion 57 is connected with an antenna 71, and receives radio signals of radio broadcasting which are received with antenna 71. Radio receiving portion 57 is controlled by CPU 51 to modulate the received radio signals to output an audio signal to audio signal processing portion 59.

Disc reproducing device 63 is controlled by CPU 51 to reproduce sound/video from an optical disc, such as a compact disc (CD) or a digital versatile disc (DVD), to output an audio signal to audio signal processing portion 59. Further, disc reproducing device 63 has an output terminal for a video signal, which is connected with a connector for connecting with video decoder 37 included in navigation device 10. Therefore, when audio device 50 and navigation device 10 are electrically connected to each other, the video signal output from disc reproducing device 63 is output to navigation device 10.

Audio signal processing portion 59 has three input terminals: one being connected with an audio output terminal in disc reproducing device 63, one being connected with an audio output terminal in radio receiving portion 57, and the other being connected with a connector for connecting with an output terminal in switch 31 included in navigation device 10. Audio signal processing portion 59 is controlled by CPU 51 to switch the output of the audio signal. Specifically, in the case where CPU 11 included in navigation device 10 reads audio data which is compression-coded in accordance with a standard such as MP3 and outputs it to audio codec 29, audio signal processing portion 59 selects any of the audio signals input from the three input terminals, adjusts the volume of the audio signal, and then outputs the signal to amplifier 61.

Further, when CPU 11 included in navigation device 10 performs a navigation process, audio signal processing portion 59 mixes an audio signal output from either the audio output terminal of disc reproducing device 63 or the audio output terminal of radio receiving portion 57 with an audio signal received from switch 31, adjusts the volume of the mixed audio signal, and then outputs the signal to amplifier 61. Amplifier 61, which is connected with a vehicle-mounted speaker, outputs an audio signal selected by audio signal processing portion 59, to the vehicle-mounted speaker.

Receiving portion 55 receives an infrared signal output from a remote controller 70. Receiving portion 55 outputs the received infrared signal to CPU 51. Therefore, audio device 50 is remotely controlled by remote controller 70.

Power supply circuit 67 is connected with a vehicle battery mounted on a vehicle and supplied with power from the vehicle battery. The output terminal of power supply circuit 67 is connected with an input terminal of second power supply switching portion 69, and also connected with a connector which is connected with the input terminal of power supply circuit 41 included in navigation device 10. Thus, power supply circuit 67 not only supplies power to second power supply switching portion 69, but also supplies power to power supply circuit 41 when navigation device 10 and audio device 50 are electrically connected to each other.

Second power supply switching portion 69 includes the input terminal for receiving power supplied from power supply circuit 67, and an output terminal for supplying power, received at the input terminal, to disc reproducing device 63, audio signal processing portion 59, amplifier 61, and radio receiving portion 57. Second power supply switching portion 69 is controlled by CPU 51 to turn on/off a sub-power supply. When second power supply switching portion 69 receives from CPU 51 an instruction to turn on the sub-power supply, it supplies power to disc reproducing device 63, audio signal processing portion 59, amplifier 61, and radio receiving portion 57. On the other hand, when second power supply switching portion 69 receives an instruction to turn off the sub-power supply, it shuts off the power supply to disc reproducing device 63, audio signal processing portion 59, amplifier 61, and radio receiving portion 57.

CPU 51 is driven using power supply circuit 67 as a power source. CPU 51 is driven while the main power supply is on, and is able to control second power supply switching portion 69 to turn on/off the sub-power supply. CPU 51 is driven while the main power supply is on, even when the sub-power supply is off. When the main power supply is on and the sub-power supply is off, only CPU 51 is supplied with power, and disc reproducing device 63, audio signal processing portion 59, amplifier 61, and radio receiving portion 57 are not supplied with power. When CPU 51 turns on the sub-power supply, disc reproducing device 63, audio signal processing portion 59, amplifier 61, and radio receiving portion 57 are supplied with power from power supply circuit 67. CPU 51 is supplied with power from power supply circuit 67 while the main power supply is on, so that it can communicate with navigation device 10.

Navigation device 10 includes CPU 11 and audio device 50 includes CPU 51. Thus, when navigation device 10 and audio device 50 are not electrically connected with each other, navigation device 10 and audio device 50 each function independently. On the other hand, when navigation device 10 and audio device 50 are electrically connected with each other, CPU 11 included in navigation device 10 and CPU 51 included in audio device 50 are connected, and they function in an integrated manner, with CPU 11 in navigation device 10 functioning as a master and CPU 51 in audio device 50 functioning as a slave.

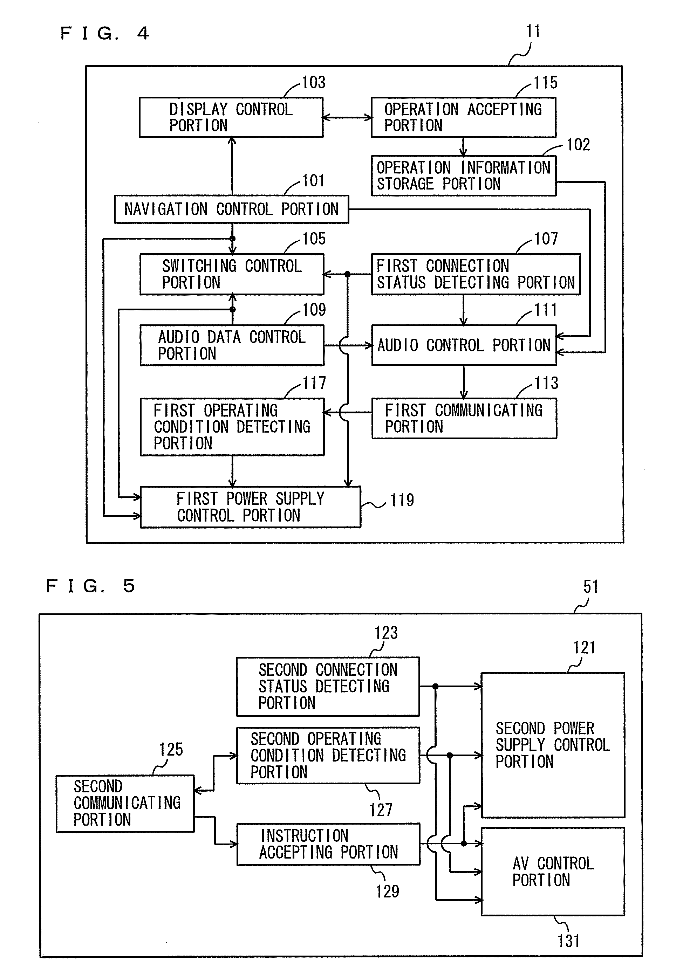

Fig. 4 is a functional block diagram schematically illustrating the functions of the CPU included in the navigation device. Referring to Fig. 4, CPU 11 includes: a display control portion 103 for controlling display of liquid crystal display 23; an operation accepting portion 115 accepting an operation by a user; an operation information storage portion 102 for storing the operation accepted; a navigation control portion 101 which is responsible for navigation functions; an audio data control portion 109 controlling an input/output of audio data; an audio control portion 111 for controlling audio device 50; a first communicating portion 113 for communicating with audio device 50; a switching control portion 105 for controlling switch 31; a first connection status detecting portion 107 for detecting a connection status with audio device 50; a first operating condition detecting portion 117 for detecting an operating condition of audio device 50; and a first power supply control portion 119 for controlling first power supply switching portion 43.

Display control portion 103 controls liquid crystal display 23 to switch an image displayed on liquid crystal display 23. The images displayed include an operation screen for accepting an operation by a user, a screen displaying a map for navigation which is output from navigation control portion 101, and an image which is input from audio device 50. The images include still and moving images. The operation screen for accepting the user operation includes a main menu, a screen for accepting an operation directed to audio device 50, and a screen for accepting an operation directed to navigation device 10.

Operation accepting portion 115 is connected with operation key 27 and touch screen 25, to accept an operation input into operation key 27 or touch screen 25 by a user. A position designated by the user while display control portion 103 is displaying the operation screen is checked against positions of buttons displayed on the operation screen, so as to accept the operation of designating a button.

Operation information storage portion 102 stores operation information including the operation accepted by operation accepting portion 115 into RAM 21. The operations accepted by operation accepting portion 115 include an operation directed to navigation device 10 and an operation directed to audio device 50.

Navigation control portion 101 reads the operation information stored in RAM 21 to operate in accordance with the operation specified by the read operation information. Navigation control portion 101 outputs to display control portion 103 an image in which a current position is shown on a map, on the basis of current position data input from GPS receiver 13 and map data stored in memory card 15A mounted on memory I/F 15. Navigation control portion 101 also generates various images, such as a route to a destination which is found by searching, facilities around the current position, and the like, in accordance with the user operations, and outputs the images to display control portion 103. Furthermore, navigation control portion 101 outputs audio data including a synthesized speech of the route guidance to the destination, to audio codec 29. This causes the audio data to be decoded by audio codec 29 and the decoded audio signal to be output to switch 31.

Audio data control portion 109 reads the operation information stored in RAM 21 and, in accordance with the operation specified by the read operation information, reads compressed audio data from memory card 15A mounted on memory I/F 15, and outputs the data to audio codec 29. This causes the compressed audio data to be decoded by audio codec 29 and the decoded audio signal to be output to switch 31.

First connection status detecting portion 107 detects an electrical connection with audio device 50. Specifically, CPU 11 is connected with CPU 51 in audio device 50 through a cable in the state where navigation device 10 is attached to audio device 50. Whether the electrical connection is established therebetween is determined in accordance with whether a voltage on a connecting pin connected to the cable exceeds a predetermined value. When the voltage on the connecting pin is greater than the predetermined value, it is detected that the electrical connection with audio device 50 has been established. During the time when the electrical connection with audio device 50 is being detected, first connection status detecting portion 107 outputs a connect signal to switching control portion 105, audio control portion 111, and first power supply control portion 119. During the time when no electrical connection with audio device 50 is being detected, first connection status detecting portion 107 outputs a disconnect signal to switching control portion 105, audio control portion 111, and first power supply control portion 119.

Switching control portion 105 receives a connect signal or a disconnect signal from first connection status detecting portion 107, and controls switch 31 on the basis of the signal. When receiving the connect signal, switching control portion 105 controls switch 31 so that the audio signal is output to audio device 50. When receiving the disconnect signal, switching control portion 105 controls switch 31 so that the audio signal is output to amplifier 33. Thus, during the time when navigation device 10 and audio device 50 are electrically connected with each other, the audio signal output from navigation device 10 is output to audio device 50, and sound is output from the vehicle-mounted speaker connected to audio device 50. On the other hand, when navigation device 10 and audio device 50 are electrically disconnected from each other and each functioning independently, then navigation device 10 outputs sound from speaker 35 built therein.

First communicating portion 113 is a communication interface for communicating with audio device 50. First communicating portion 113 is connected with second communicating portion 125 included in audio device 50 via a connector in the state where navigation device 10 is coupled with audio device 50.

Audio control portion 111 receives a connect signal or a disconnect signal from first connection status detecting portion 107, and receives operating conditions from navigation control portion 101 and audio data control portion 109. When receiving the connect signal from first connection status detecting portion 107, audio control portion 111 outputs the operating conditions input from navigation control portion 101 and audio data control portion 109 to audio device 50 via first communicating portion 113. In the case where operation information including an operation directed to audio device 50 (hereinafter, referred to as "audio operation information") is stored in RAM 21, audio control portion 111 transmits a control signal including the audio operation information to audio device 50 via first communicating portion 113. The control signal is a signal for controlling audio device 50. Accordingly, when navigation device 10 and audio device 50 are electrically connected to each other, audio device 50 is controlled by navigation device 10. Therefore, a user can operate touch screen 25 or operation key 27 in navigation device 10 so as to operate audio device 50.

Even in the state where an electrical connection with audio device 50 has not been established, operation accepting portion 115 accepts an operation directed to audio device 50, and operation information storage portion 102 stores audio operation information including the operation accepted by operation accepting portion 115 into RAM 21. Thus, the operation that had been input into navigation device 10 when navigation device 10 and audio device 50 were not electrically connected with each other is transmitted to audio device 50 by audio control portion 111 once navigation device 10 is electrically connected to audio device 50. In this manner, an operation for causing audio device 50 to operate can be advantageously input into navigation device 10 in advance while navigation device 10 is operating independently. For example, if a user inputs an operation directed to audio device 50 into navigation device 10 before getting in a vehicle and mounts navigation device 10 on audio device 50 after getting in the vehicle, audio device 50 can be operated immediately.

First operating condition detecting portion 117 communicates with audio device 50 via first communicating portion 113, to acquire the operating condition of audio device 50. Here, first operating condition detecting portion 117 acquires either the operating condition in which the sub-power supply of audio device 50 is on or the operating condition in which the sub-power supply of audio device 50 is off. First operating condition detecting portion 117 outputs the acquired operating condition of audio device 50 to first power supply control portion 119.

First power supply control portion 119 controls first power supply switching portion 43 to turn on/off the sub-power supply. First power supply control portion 119 receives a connect signal or a disconnect signal from first connection status detecting portion 107, receives an operating condition of audio device 50 from first operating condition detecting portion 127, and receives operating conditions from navigation control portion 101 and audio data control portion 109.

In the state where first power supply switching portion 43 keeps the sub-power supply off, when the signal input from first connection status detecting portion 107 has changed from the disconnect signal to the connect signal and the operating condition of audio device 50 input from first operating condition detecting portion 117 indicates that the sub-power supply of audio device 50 is on, then first power supply control portion 119 causes first power supply switching portion 43 to turn on the sub-power supply. When navigation device 10 is electrically connected to audio device 50 in the state where the sub-power supply of navigation device 10 is off, the sub-power supply of navigation device 10 is automatically turned on provided that the sub-power supply of audio device 50 is on. Thus, for example an operation screen for operating audio device 50 may be displayed on liquid crystal display 23 so as to immediately implement the state where audio device 50 can be operated by navigation device 10.

Further, in the state where first power supply switching portion 43 keeps the sub-power supply on, when the signal input from first connection status detecting portion 107 has changed from the connect signal to the disconnect signal and the operating conditions received from navigation control portion 101 and audio data control portion 109 indicate that neither navigation control portion 101 nor audio data control portion 109 is operating, then first power supply control portion 119 causes first power supply switching portion 43 to turn off the sub-power supply. When navigation device 10, which has been electrically connected with audio device 50 in the state where the sub-power supply of navigation device 10 is on, is electrically disconnected from audio device 50, the sub-power supply of navigation device 10 is automatically turned off provided that neither the navigation function nor the reproduction of audio data such as MP3 is being executed. In the case where navigation device 10 is not executing the navigation function or reproducing the audio data such as MP3, navigation device 10 is performing only the process of operating audio device 50. The process of operating the audio device becomes unnecessary when navigation device 10 is disconnected from audio device 50, and thus, the sub-power supply is turned off. This not only prevents navigation device 10 from wasting power, but also eliminates the need for the user to perform an operation of turning off the sub-power supply, so that the operations can be simplified.

Fig. 5 is a functional block diagram schematically illustrating the functions of the CPU included in the audio device. Referring to Fig. 5, CPU 51 includes: a second power supply control portion 121 for controlling second power supply switching portion 69; a second connection status detecting portion 123 for detecting an electrical connection with navigation device 10; second communicating portion 125 for communicating with navigation device 10; a second operating condition detecting portion 127 for detecting an operating condition of the navigation device; an instruction accepting portion 129 for accepting an operating instruction from navigation device 10 or receiving portion 55; and an AV control portion 131 for controlling disc reproducing device 63, audio signal processing portion 59, and radio receiving portion 57.

Second connection status detecting portion 123 detects an electrical connection with navigation device 10. Specifically, in the state where navigation device 10 is coupled with audio device 50, CPU 51 is connected with CPU 11 included in navigation device 10 via a cable. Whether the electrical connection is established therebetween is determined in accordance with whether a voltage on a connecting pin connected to the cable exceeds a predetermined value. If the voltage on the connecting pin is greater than the predetermined value, it is determined that the electrical connection with navigation device 10 has been established; if the voltage on the connecting pin is not greater than the predetermined value, it is determined that the electrical connection has not been established. Second connection status detecting portion 123 outputs a connect signal to second power supply control portion 121 and AV control portion 131 while the electrical connection with navigation device 10 is being detected, whereas it outputs a disconnect signal to second power supply control portion 121 and AV control portion 131 while the electrical connection is not being detected.

Second communicating portion 125 is a communication interface for communicating with navigation device 10. In the state where audio device 50 is electrically connected with navigation device 10, second communicating portion 125 is connected with first communicating portion 113 included in navigation device 10. Second communicating portion 125 is connected to second operating condition detecting portion 127 and instruction accepting portion 129.

Instruction accepting portion 129 accepts an operating instruction from receiving portion 55 or second communicating portion 125. Thus, during the time when audio device 50 is electrically connected with navigation device 10, instruction accepting portion 129 receives a control signal from navigation device 10 via second communicating portion 125, and performs processing in accordance with an operation included in the control signal. As such, audio device 50 is capable of performing processing in accordance with an operation input to navigation device 10 while audio device 50 is being electrically connected with navigation device 10. Instruction accepting portion 129 outputs the accepted operation to second power supply control portion 121 and AV control portion 131.

Second operating condition detecting portion 127 communicates with navigation device 10 via second communicating portion 125, to acquire an operating condition of navigation device 10. Here, second operating condition detecting portion 127 acquires an operating condition in which the sub-power supply is on or off, and in the case where the sub-power supply is on, it further acquires an operating condition indicating whether audio data is being reproduced, and an operating condition indicating whether the navigation function is being activated. The operating condition in which the sub-power supply is on, the audio data is not being reproduced, and the navigation function is not being activated may include, for example, the condition in which navigation device 10 is displaying a menu, a navigation menu for accepting an operation directed to navigation device 10 or an audio menu for accepting an operation directed to audio device 50, and accepting an operation.

Second power supply control portion 121 receives either a connect signal or a disconnect signal from second connection status detecting portion 123, receives an operating condition of navigation device 10 from second operating condition detecting portion 127, and accepts an operating instruction from instruction accepting portion 129, so as to control second power supply switching portion 69 on the basis thereof. In the state where second power supply control portion 121 is outputting to second power supply switching portion 69 an instruction for keeping the sub-power supply on, when the connect signal is input from second connection status detecting portion 123 and the operating condition indicating that the device is not in operation is received from second operating condition detecting portion 127, then second power supply control portion 121 outputs an instruction to turn off the sub-power supply to second power supply switching portion 69. As a result, when navigation device 10 that is not being driven is attached to audio device 50 in the state where the sub-power supply of audio device 50 is on, the sub-power supply of audio device 50 is turned off. This eliminates the need for the user to perform an operation to turn off the sub-power supply of audio device 50.

Further, in the state where second power supply control portion 121 is outputting to second power supply switching portion 69 an instruction for keeping the sub-power supply on, when the signal input from second connection status detecting portion 123 changes from the connect signal to the disconnect signal, second power supply control portion 121 outputs to second power supply switching portion 69 an instruction to turn off the sub-power supply, provided that AV control portion 131 is not driving disc reproducing device 63 or radio receiving portion 57. As a result, when navigation device 10 is detached in the state where the sub-power supply of audio device 50 is on and neither disc reproducing device 63 nor radio receiving portion 57 is being driven, the sub-power supply of audio device 50 is turned off. This prevents the power from being wasted in audio device 50. It also eliminates the need for the user to perform an operation to turn off the sub-power supply of audio device 50, so that the operations can be simplified.

Furthermore, in the state where second power supply control portion 121 is outputting to second power supply switching portion 69 an instruction for keeping the sub-power supply on, even when the signal input from second connection status detecting portion 123 changes from the connect signal to the disconnect signal, second power supply control portion 121 continues to output to second power supply switching portion 69 the instruction for keeping the sub-power supply on, if AV control portion 131 is driving disc reproducing device 63 or radio receiving portion 57. This allows audio device 50 to function independently when navigation device 10 and audio device 50 are not electrically connected with each other.

Alternatively, it may be configured such that, in the state where the instruction for keeping the sub-power supply on is being output to second power supply switching portion 69, when the disconnect signal is input from second connection status detecting portion 123, the instruction to turn off the sub-power supply is issued to second power supply switching portion 69, irrespective of whether or not disc reproducing device 63 or radio receiving portion 57 is being driven.

In the state where second power supply control portion 121 is outputting to second power supply switching portion 69 an instruction for keeping the sub-power supply off, when the signal input from second connection status detecting portion 123 changes from the disconnect signal to the connect signal and the operating condition input from second operating condition detecting portion 127 indicates that the sub-power supply of navigation device 10 is on, then second power supply control portion 121 issues an instruction to turn on the sub-power supply to second power supply switching portion 69. As a result, during the time when navigation device 10 is in the operating condition where audio data is being reproduced or in the operating condition where the navigation function is being activated, the audio signal output from navigation device 10 can be output from the vehicle-mounted speaker. Therefore, it is unnecessary for the user to perform an operation to turn on the sub-power supply of audio device 50.

Further, when navigation device 10 is neither in the operating condition where the audio data is being reproduced nor in the operating condition where the navigation function is being activated, but is displaying an operation screen (audio menu) for operating audio device 50, then second power supply control portion 121 can receive a control signal output from navigation device 10 to immediately perform the processing in accordance with an operation included in the control signal. Thus, the user may set, in navigation device 10, an operation directed to audio device 50 in advance in the state where navigation device 10 and audio device 50 are electrically disconnected from each other.

It is noted that second power supply control portion 121 does not turn on the sub-power supply in the case where the operating condition of navigation device 10 received from second operating condition detecting portion 127 indicates that the sub-power supply of navigation device 10 is off.

AV control portion 131 is connected to second connection status detecting portion 123, instruction accepting portion 129, and second operating condition detecting portion 127. AV control portion 131 controls driving of disc reproducing device 63 or radio receiving portion 57 in accordance with an operating instruction received from instruction accepting portion 129. When the connect signal is received from second connection status detecting portion 123 and the operating condition received from second operating condition detecting portion 127 indicates that the audio data is being reproduced, then AV control portion 131 stops driving of disc reproducing device 63 or radio receiving portion 57. This allows the audio data reproduced by navigation device 10 to be output from speaker 35. Accordingly, it is unnecessary for the user to operate audio device 50 to stop driving of disc reproducing device 63 or radio receiving portion 57.

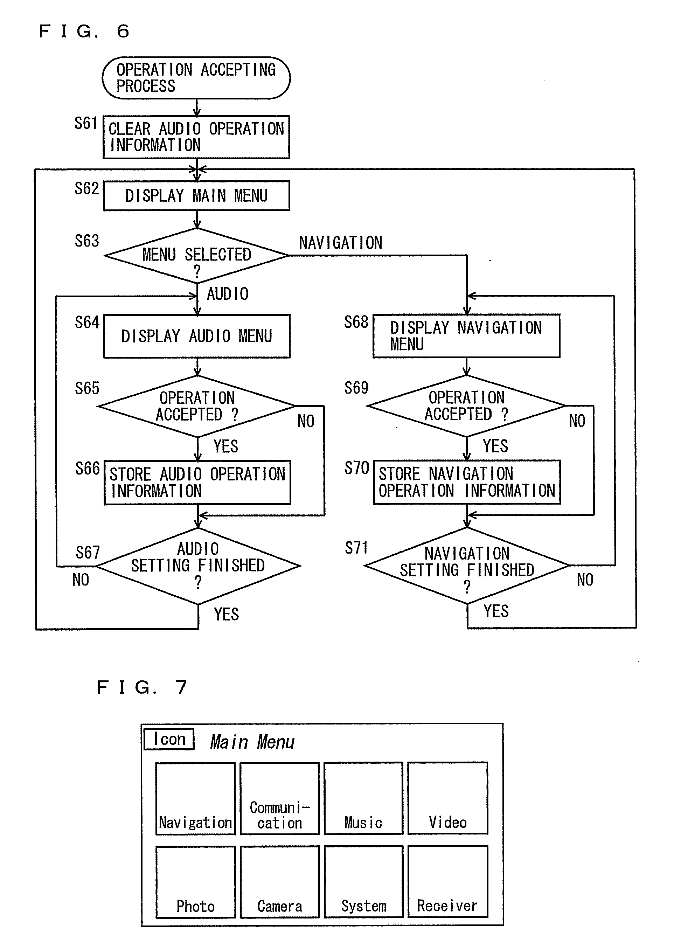

Fig. 6 is a flowchart illustrating an example of the flow of an operation accepting process. The operation accepting process is carried out by CPU 11 included in navigation device 10 as CPU 11 executes a control program stored in ROM 19. The operation accepting process is carried out when the sub-power supply is on, irrespective of whether or not navigation device 10 is electrically connected with audio device 50.

Referring to Fig. 6, CPU 11 clears an operation directed to audio device 50 (hereinafter, referred to as "audio operation information") stored in RAM 21 (step S61). This is to cause only one type of audio operation to be transmitted to audio device 50, so that the operation screen to be displayed on navigation device 10 matches the audio operation transmitted to audio device 50. It is also to prevent audio device 50 from malfunctioning due to a plurality of audio operations transmitted to audio device 50. In the following step S62, a main menu is displayed on liquid crystal display 23.

Fig. 7 shows an example of a screen displaying the main menu. The main menu includes a button for transition to a screen for inputting an operation directed to the navigation device (hereinafter, referred to as the "navigation menu"), and a button for transition to a screen for inputting an operation directed to audio device 50 (hereinafter, referred to as the "audio menu").

The button for transition to the navigation menu includes: a button having letters "Navigation" displayed thereon, for setting a navigation function; a button having letters "Communication" displayed thereon, for setting a communication function; a button having letters "Music" displayed thereon, for setting an audio data reproducing function; a button having letters "Video" displayed thereon, for setting a video function; a button having letters "Photo" displayed thereon, for setting a photograph function; a button having letters "Camera" displayed thereon, for setting a shooting function; and a button having letters "System" displayed thereon, for performing system settings.

The button for transition to the audio menu is a button having letters "Receiver" displayed thereon.

While the navigation function, communication function, audio data reproducing function, video function, photograph function, shooting function, and system setting function have been given above by way of example as the functions (feasible operations) of navigation device 10, and the main menu including the buttons each for transition to a screen for setting the corresponding function has been given as an example, in the following, for simplification of explanation, it is assumed that navigation device 10 has the navigation function and the audio data reproducing function. Accordingly, in the following description, the operating condition where navigation device 10 is in operation refers to the condition where the navigation function and the audio data reproducing function are being executed. In the case where navigation device 10 has the communication function, video function, photograph function, shooting function, and system setting function, the operating condition where navigation device 10 is in operation may refer to the condition where those functions are being executed.

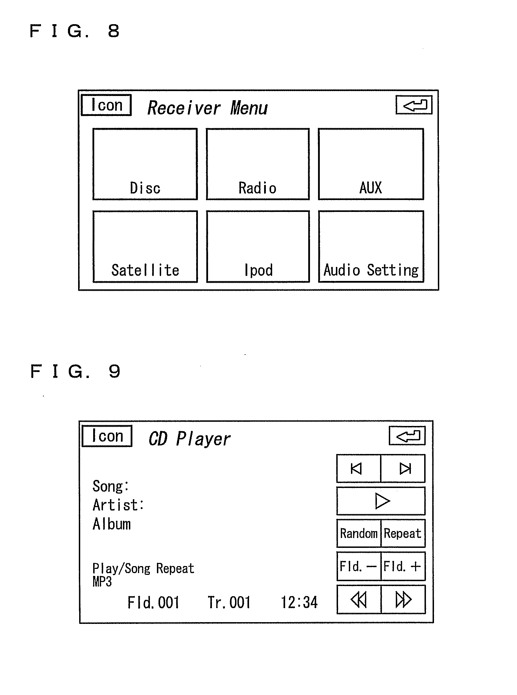

Fig. 8 shows an example of the audio menu. Referring to Fig. 8, it includes transition buttons for setting various functions of audio device 50. A button having letters "Disc" displayed thereon is for transition to a screen for setting an operation directed to disc reproducing device 63 which reproduces sound/video from an optical disc such as a CD. A button having letters "Radio" displayed thereon is for transition to a screen for setting an operation directed to radio receiving portion 57. A button having letters "AUX" displayed thereon is for transition to a screen for performing settings with respect to an input signal from an external input terminal included in audio device 50. A button having letters "Satellite" displayed thereon is for transition to a screen for setting an operation for receiving satellite broadcasting. A button having letters "ipod" displayed thereon is for transition to a screen for performing settings with respect to a music player which is connected to audio device 50. A button having letters "Audio Setting" displayed thereon is for transition to a screen for performing settings with respect to sound which is output from audio device 50, such as volume, sound quality, and the like.

Fig. 9 shows an example of the screen for setting an operation directed to disc reproducing device 63. Referring to Fig. 9, it includes: buttons for designating playback, fast forward, and rewind, buttons for designating a field or track to be played back, and buttons for designating random playback and repeat playback, respectively, to disc reproducing device 63. It also includes an area in which the operation content that has been set is displayed.

Returning to Fig. 6, after the main menu as shown in Fig. 7 is displayed on liquid crystal display 23 in step S62, it is determined whether a menu has been selected (step S63). The process is then branched in accordance with which menu has been selected. If the audio menu has been selected, the process proceeds to step S64. If the navigation menu has been selected, the process proceeds to step S68.

In step S64, the audio menu as shown in Fig. 8 is displayed on liquid crystal display 23. It is then determined whether an operation has been accepted (step S65). For example, it is determined whether an operation directed to audio device 50 has been input into the screen for setting an operation directed to audio device 50 as shown in Fig. 9. If an operation has been accepted, the process proceeds to step S66; otherwise, the process proceeds to step S67.

In step S66, audio operation information including the operation directed to audio device 50 (hereinafter, referred to as the "audio operation") that has been accepted is stored in RAM 21. In the following step S67, it is determined whether setting of the operation directed to the audio device has been finished. Specifically, it is determined whether an end key included in operation key 27 has been pressed. If the setting of the operation directed to the audio device has been finished, the process returns to step S62; otherwise, the process returns to step S64.

On the other hand, in step S68, the navigation menu is displayed on liquid crystal display 23. It is then determined whether an operation has been accepted (step S69). For example, the button having the letters "Navigation" thereon is designated in the main menu shown in Fig. 7, and an operation which is set in the screen for setting the navigation function is accepted. If an operation has been accepted, the process proceeds to step S70; otherwise, the process proceeds to step S71.

In step S70, navigation operation information including the operation directed to navigation device 10 (hereinafter, referred to as the "navigation operation") that has been accepted is stored in RAM 21. In the following step S71, it is determined whether the setting of the operation directed to navigation device 10 has been finished. Specifically, it is determined whether an end key included in operation key 27 has been pressed. If the setting of the operation directed to the audio device has been finished, the process returns to step S62; otherwise, the process returns to step S68.

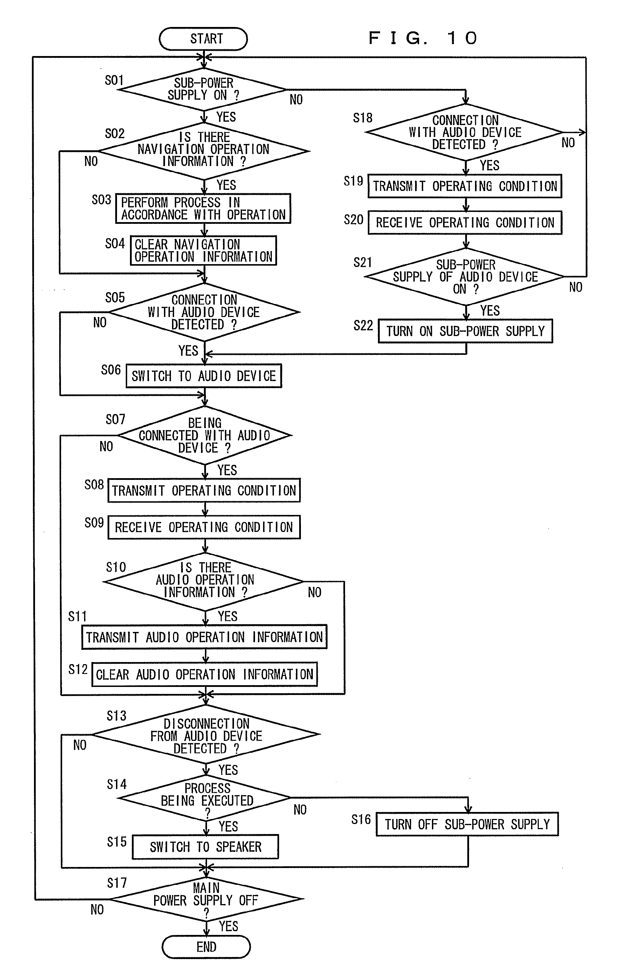

Fig. 10 is a flowchart illustrating an example of the flow of a process which is executed in the navigation device. The process shown in Fig. 10 is carried out by CPU 11 included in navigation device 10 as CPU 11 executes a control program stored in ROM 19.

Referring to Fig. 10, CPU 11 of navigation device 10 determines whether the sub-power supply is on (step S01). If the sub-power supply is on, the process proceeds to step S02. If the sub-power supply is off, the process proceeds to step S18.

In step S18, it is determined whether an electrical connection with audio device 50 has been detected. If the voltage on the connecting pin connected with CPU 51 of audio device 50 exceeds a predetermined value, it is determined that the connection has been established. If the connection with audio device 50 has been detected, the process proceeds to step S 19; otherwise, the process returns to step S01.

In step S 19, the operating condition of navigation device 10 is transmitted to audio device 50. Here, the sub-power supply is off, and thus, the operating condition in which the sub-power supply is off is transmitted. Next, the operating condition is received from audio device 50 (step S20). Then, on the basis of the received operating condition of the audio device, it is determined whether audio device 50 is in the operating condition in which the sub-power supply is on (step S21). If audio device 50 is in the operating condition in which the sub-power supply is on, the process proceeds to step S22; otherwise, the process returns to step S01. In step S22, the sub-power supply is turned on, and the process proceeds to step S06. In the case where both of the sub-power supply of navigation device 10 and the sub-power supply of audio device 50 are off, the sub-power supply of navigation device 10 is not turned on. On the other hand, if the sub-power supply of audio device 50 is on, the sub-power supply of navigation device 10 is turned on. This eliminates the need of the operation of turning on the sub-power supply of navigation device 10 when navigation device 10 is connected to audio device 50. Furthermore, this makes it possible to operate audio device 50 via navigation device 10 immediately after navigation device 10 is connected to the audio device.

On the other hand, in step S02, it is determined whether navigation operation information is stored in RAM 21. If the navigation operation information is stored in RAM 21, the process proceeds to step S03; otherwise, the process proceeds to step S05.

In step S03, the navigation operation information stored in RAM 21 is read, and the process is performed in accordance with the operation specified by the read navigation operation information. In step S04, the navigation operation information stored in RAM 21 is cleared. The navigation operation information stored in RAM 21 is erased so as to prevent the same operation from being performed when step S02 is performed next time.

In step S05, it is determined, as in step S 18, whether an electrical connection with audio device 50 has been detected. If the connection with audio device 50 has been detected, the process proceeds to step S06; otherwise, the process proceeds to step S07, with step S06 being skipped. In step S06, an audio output is switched to audio device 50. Accordingly, the audio data being reproduced in navigation device 10 is output from the vehicle-mounted speaker connected to audio device 50.

In step S07, it is determined whether the electrical connection with audio device 50 is being maintained. Specifically, it is determined whether the condition that the voltage on the connecting pin connected to CPU 51 in audio device 50 is greater than the predetermined value has been maintained. If the connection with audio device 50 is being maintained, the process proceeds to step S08; otherwise, the process proceeds to step S13. The processes in steps S08 and S09 are performed repeatedly during the time when navigation device 10 and audio device 50 are electrically connected with each other. The processes in steps S08 and S09 may be performed at predetermined intervals during the time when navigation device 10 and audio device 50 are electrically connected with each other.

In step S08, the operating condition of navigation device 10 is transmitted to audio device 50. Here, the operating condition in which the sub-power supply is on, the operating condition indicating whether audio data is being reproduced, and the operating condition indicating whether the navigation function is being activated are transmitted. Next, the operating condition is received from audio device 50 (step S09).

In the following step S10, it is determined whether audio operation information is stored in RAM 21. If the audio operation information is stored therein, the process proceeds to step S11; otherwise, the process proceeds to step S12. In step S11, the audio operation information that has been read is transmitted to audio device 50. The audio operation information stored in RAM 21 is then cleared (step S12). The audio operation information stored in RAM 21 is erased so as to prevent the same operation from being transmitted to audio device 50 when step S10 is performed next time. In the case where steps S10 to S12 are performed following step S22, when navigation device 10 is connected to audio device 50, the audio operation that has been input into navigation device 10 before establishment of the connection is transmitted to audio device 50. This allows an operation directed to audio device 50 to be input into navigation device 10 before navigation device 10 is connected to audio device 50.

In step S 13, it is determined whether the electrical connection with audio device 50 has been disconnected. Specifically, it is determined that the connection has been disconnected if the voltage on the connecting pin connected to audio device 50 is not greater than the predetermined value. If it is detected that the electrical connection with audio device 50 has been disconnected, the process proceeds to step S14; otherwise, the process proceeds to step S 17. In step S 14, it is determined whether the process is being executed. Specifically, it is determined whether the audio data reproducing process is being performed and the audio data is being reproduced, or the navigation process is being performed and the navigation function is being activated. If the process is being executed, the process proceeds to step S 15; otherwise, the process proceeds to step S16.

In step S 15, the audio output is switched from audio device 50 to the built-in speaker 35. The process then proceeds to step S17. As a result, even after navigation device 10 is disconnected from audio device 50, the sound being reproduced in navigation device 10 is output from the built-in speaker 35.

In step S16, the sub-power supply is turned off, and the process proceeds to step S 17. In the state where the audio data is not being reproduced or the navigation function is not being activated, if there is no electrical connection with audio device 50, the sub-power supply is turned off. This prevents power from being wasted by navigation device 10. It also eliminates the need for the user to perform the operation of turning off the sub-power supply, so that the operations can be simplified.

In step S 17, it is determined whether the main power supply has been turned off. If the main power supply is turned off, the process is terminated; otherwise, the process returns to step S01.

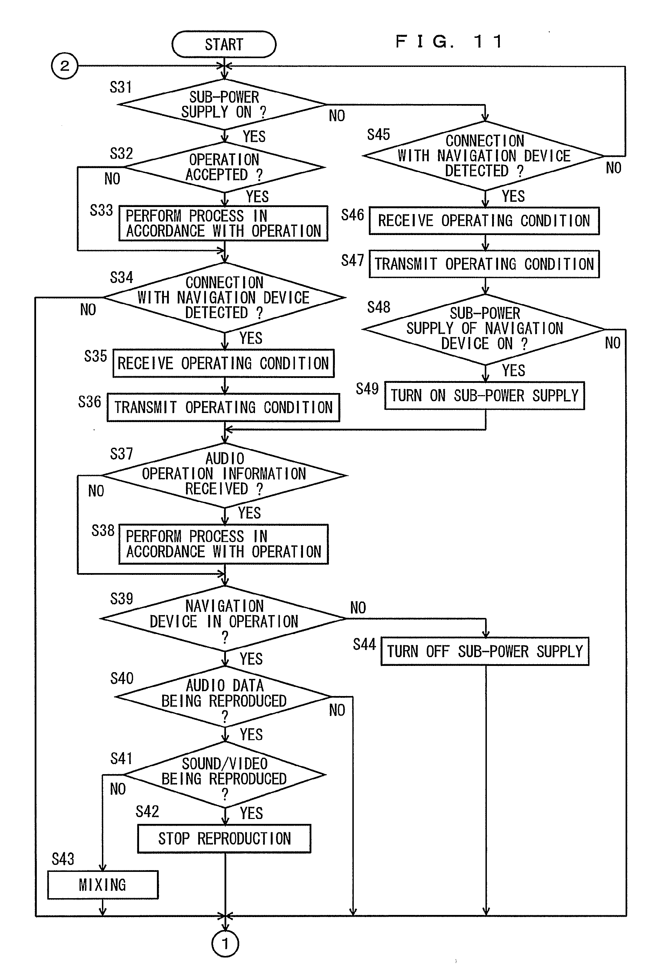

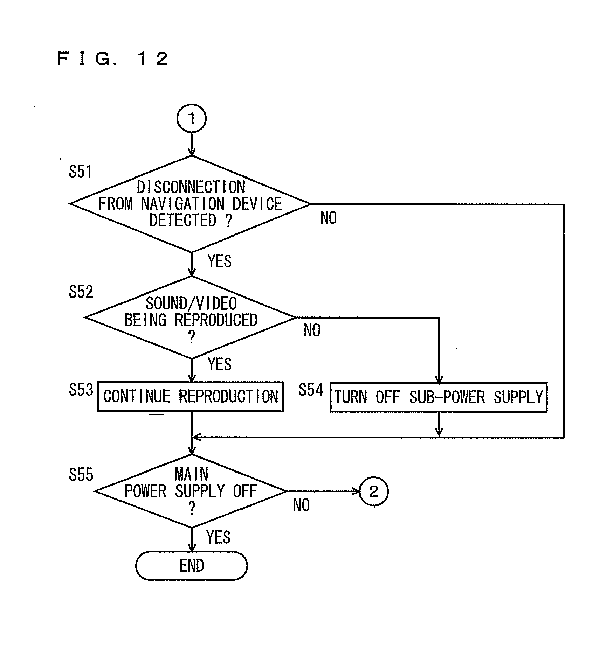

Figs. 11 and 12 are flowcharts illustrating an example of the flow of the process performed in the audio device. The process shown in Figs. 11 and 12 is carried out by CPU 51 included in audio device 50 as CPU 51 executes a control program stored in a ROM. Referring to Figs. 11 and 12, CPU 51 in audio device 50 determines whether the sub-power supply is on (step S31). If the sub-power supply is on, the process proceeds to step S32; if the sub-power supply is off, the process proceeds to step S45.

In step S45, it is determined whether an electrical connection with navigation device 10 has been detected. If the voltage on the connecting pin connected to CPU 11 in navigation device 10 exceeds a predetermined value, it is determined that the connection has been established. If the connection with navigation device 10 has been detected, the process proceeds to step S46; otherwise, the process returns to step S31.

In step S46, the operating condition is received from navigation device 10. The operating condition of audio device 50 is then transmitted to navigation device 10 (step S47). Here, the operating condition where the sub-power supply is off is transmitted.

In the following step S48, it is determined whether the sub-power supply of navigation device 10 is on, on the basis of the operating condition of navigation device 10 received in step S46. If the sub-power supply of navigation device 10 is on, the process proceeds to step S49; otherwise, the process proceeds to step S51. In step S49, the sub-power supply of the own device is turned on, and the process proceeds to step S37. In this manner, the operating condition of the power supply in the own device can be matched to the operating condition of the power supply in navigation device 10. Accordingly, when the devices that had been driven independently from each other are integrated, their operations are matched with each other, making it easy to understand their operating modes. Furthermore, this eliminates the need to perform the operation of turning on the sub-power supply of audio device 50, whereby the operations can be simplified.

On the other hand, in step S32, it is determined whether an operation has been accepted. If the operation has been accepted, the process proceeds to step S33; otherwise, the process proceeds to step S34. The operation here may include the operation which is included in the control signal received from navigation device 10 and the operation which is received from remote controller 70. When the operation is received from either navigation device 10 or remote controller 70, the process proceeds to step S33.

In step S33, the process is carried out in accordance with the operation accepted in step S32. The process performed in accordance with the operation may include, e.g., a process for controlling disc reproducing device 63, a process for controlling audio signal processing portion 59, and a process for controlling radio receiving portion 57.

In step S34, it is determined whether an electrical connection with navigation device 10 has been detected. If the voltage on the connecting pin connected to CPU 11 in navigation device 10 exceeds a predetermined value, it is determined that the connection has been established. If the connection with navigation device 10 has been detected, the process proceeds to step S35; otherwise, the process proceeds to step S51.

In step S35, the operating condition is received from navigation device 10. Then, the operating condition of audio device 50 is transmitted to navigation device 10 (step S36). Here, the operating condition where the sub-power supply is on, and the operating condition including the condition of the process performed in step S33 are transmitted.

It is then determined whether audio operation information has been received from navigation device 10 (step S37). Specifically, it is determined whether a control signal has been received from navigation device 10 and whether the control signal received includes the audio operation information. If the audio operation information has been received, the process proceeds to step S38; otherwise, the process proceeds to step S39.

In this manner, when audio device 50 is electrically connected with navigation device 10, in response to the event that audio operation information is received from navigation device 10, audio device 50 performs a process in accordance with the operation specified by the audio operation information. This allows an operation directed to audio device 50 to be set in advance in navigation device 10.

Particularly in the case where the process proceeds from step S49 to step S37, when audio device 50 is electrically connected with navigation device 10 in the state where the sub-power supply of audio device 50 is off, the sub-power supply of audio device 50 is turned on (step S49), and thereafter, audio device 50 receives the audio operation information from navigation device 10 (step S37), and performs a process in accordance with the operation specified by the received audio operation information (step S38). Accordingly, an operation directed to audio device 50 may be set in advance in navigation device 10, and after that, with the simple operation of attaching navigation device 10 to audio device 50, it is possible to cause audio device 50 to operate in accordance with the operation that has been set in advance in navigation device 10.

In step S39, it is determined whether navigation device 10 is in operation, on the basis of the operating condition of navigation device 10 received in step S35. If navigation device 10 is in operation, the process proceeds to step S40; otherwise, the process proceeds to step S44. Here, the determination that navigation device 10 is in operation is made when navigation device 10 is in the operating condition where audio data is being reproduced, or in the operating condition where the navigation function is being activated.

In step S40, it is determined whether the operating condition of navigation device 10 indicates that the audio data is being reproduced. If the audio data is being reproduced, the process proceeds to step S41; otherwise, the process proceeds to step S51. When the process proceeds to step S51, even in the case where radio receiving portion 57 or disc reproducing device 63 is being driven in audio device 50, the driving is continued. This prevents the reproduction of the sound from being interrupted by mounting of navigation device 10. On the other hand, navigation device 10 is not in operation, and thus, the user would not have uncomfortable feelings about the operation of vehicle-mounted system 1.

In step S41, it is determined whether the own device is reproducing sound/video. Specifically, it is determined whether radio receiving portion 57 or disc reproducing device 63 is being driven. If one of them is being driven, the process proceeds to step S42; if neither of them is being driven, the process proceeds to step S43.

In step S43, the sound being reproduced by navigation device 10 and the sound being reproduced by audio device 50 are mixed. When the process proceeds to step S43, the navigation function is being activated in navigation device 10. Thus, the synthesized speech generated by the navigation function and the sound output from radio receiving portion 57 or disc reproducing device 63 are mixed. Accordingly, even in the case where radio receiving portion 57 or disc reproducing device 63 is being driven in audio device 50, the driving is continued, and reproduction of the sound is not interrupted by mounting of navigation device 10. Furthermore, the speech guidance or the like that is output while the navigation function is being activated in navigation device 10 is mixed so as to be output from speaker 35. It is thus unnecessary for the user to perform a switching operation to cause the speech output from navigation device 10 to be output from speaker 35.

In step S42, one of radio receiving portion 57 and disc reproducing device 63 that is being driven is stopped. Accordingly, the audio data that is being reproduced by navigation device 10 is output from the vehicle-mounted speaker.

In step S44, the sub-power supply is turned off. When navigation device 10 in the state where the power supply is off is attached to audio device 50, the sub-power supply of audio device 50 is turned off. That is, when the devices that had been driven independently from each other are integrated, their operations are matched with each other, making it easy to understand their operating modes. Furthermore, this eliminates the need to perform the operation of turning off the sub-power supply of audio device 50, whereby the operations can be simplified.

In step S51, it is determined whether disconnection of the electrical connection with navigation device 10 has been detected (step S51). In the case where the voltage on the connecting pin connected to CPU 11 in navigation device 10 changes from the level exceeding the predetermined value to the level not greater than the predetermined value, it is determined that the connection has been disconnected. If disconnection from navigation device 10 has been detected, the process proceeds to step S52; otherwise, the process proceeds to step S55. In step S52, it is determined whether the own device is reproducing sound/video. Specifically, it is determined whether radio receiving portion 57 or disc reproducing device 63 is being driven. If one of them is being driven, the process proceeds to step S53; if neither of them is being driven, the process proceeds to step S54. In step S53, the reproduction is continued, and the process is terminated. In the case where radio receiving portion 57 or disc reproducing device 63 is being driven in audio device 50, the driving is continued, so that the reproduction of the sound is not interrupted. In the case where the electrical connection with navigation device 10 is disconnected, the devices can function independently from each other.

In step S54, the sub-power supply is turned off. If neither radio receiving portion 57 nor disc reproducing device 63 is being driven, the sub-power supply can be turned off to reduce consumed power. Further, in the case where a user detaches navigation device 10 from audio device 50 in the state where the user is operating navigation device 10, the sub-power supply is turned off as long as audio device 50 is not reproducing sound/video. This eliminates the need to perform an operation to turn off the sub-power supply of audio device 50, whereby the operations can be simplified.

In step S55, it is determined whether the main power supply has been turned off. If the main power supply has been turned off, the process is terminated; otherwise, the process returns to step S31.

In vehicle-mounted system 1 according to the above embodiment, CPU 11 in navigation device 10 includes first connection status detecting portion 107 and CPU 51 in audio device 50 includes second connection information detecting portion 123, and it is configured such that navigation device 10 and audio device 50 both detect the electrical connection with the other device. Alternatively, it may be configured such that only one of the devices detects an electrical connection with the other device. In this case, it may be configured such that, during the time when one of the devices that has been configured to detect an electrical connection with the other device is detecting the electrical connection with the other device, the device periodically or continuously transmits to the other device a signal indicating that they are electrically connected with each other.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A vehicle-mounted system constituted by a reproducing device capable of reproducing sound or video and a navigation device detachable from and attachable to a front face of the reproducing device, the system comprising
connection detecting means for detecting an electrical connection between said navigation device and said reproducing device,
said navigation device including operation accepting means capable of accepting an operation directed to the own device and an operation directed to said reproducing device irrespective of whether or not the electrical connection with said reproducing device is being detected,
said reproducing device including control means for controlling an action in accordance with the operation accepted by said operation means during a time when the electrical connection with said navigation device is being detected.

2. The vehicle-mounted system according to claim 1, wherein said navigation device further includes
operation storing means for storing the operation directed to said reproducing device when the operation directed to said reproducing device is accepted by said operation accepting means during a time when the electrical connection with said reproducing device is not being detected, and
operation transmitting means for transmitting the operation stored in said operation storing means to said reproducing device in response to an event that the electrical connection with said reproducing device is detected.

3. The vehicle-mounted system according to claim 1, wherein said control means receives the operation from said navigation device when the electrical connection with said navigation device is detected, and controls the action in accordance with the received operation.

4. The vehicle-mounted system according to claim 3, wherein
said reproducing device further includes power supply switching means for turning on/off a sub-power supply, and
said control means causes said power supply switching means to turn on the sub-power supply in the case where the electrical connection with said navigation device is detected in the state where said power supply switching means keeps the sub-power supply off.

5. A navigation device detachable from and attachable to a front face of a reproducing device, the reproducing device being capable of reproducing sound or video, the navigation device comprising:
reproducing device detecting means for detecting an electrical connection with said reproducing device;
operation accepting means capable of accepting an operation directed to the own device and an operation directed to said reproducing device irrespective of whether or not the electrical connection with said reproducing device is being detected;
operation storing means for storing the operation directed to said reproducing device when the operation directed to said reproducing device is accepted by said operation accepting means during a time when the electrical connection with said reproducing device is not being detected; and
operation transmitting means for transmitting the operation stored in said operation storing means to said reproducing device in response to an event that the electrical connection with said reproducing device is detected.

6. A reproducing device capable of reproducing sound or video, having a front face to and from which a navigation device is attachable and detachable, the reproducing device comprising:
navigation device detecting means for detecting an electrical connection with said navigation device;
receiving means for receiving an operation from said navigation device when the electrical connection with said navigation device is detected; and
action control means for controlling an action in accordance with the operation received by said receiving means.

7. The reproducing device according to claim 5, further comprising power supply switching means for turning on/off a sub-power supply,
said power supply switching means turning on the sub-power supply when the electrical connection with said navigation device is detected in the state where said power supply switching means keeps the sub-power supply off.
